# EUROPEAN PATENT APPLICATION

(11) **EP 4 501 725 A1**
(43) Date of publication of application: **05.02.2025**
(21) Application number: 23780586.6
(22) Date of filing: 28.03.2023
(51) Int. Cl.: B60W 20/15, B60K 6/48, B60K 6/54, B60L 15/20, B60W 10/02, B60W 10/04, B60W 10/06, B60W 10/08, B60W 20/00, B60W 20/17, B60W 20/20, B60W 20/40, B62M 23/02

(54) **CONTROL DEVICE FOR HYBRID VEHICLE**

(30) Priority: 29.03.2022 JP 2022053378; 26.12.2022 JP 2022208059
(71) Applicant: Kawasaki Motors, Ltd., Akashi, Hyogo 673-8666 (JP)
(72) Inventor: NAKAYAMA, Kyotaro, Kobe-shi, Hyogo 650-8670 (JP); TERAI, Shohei, Kobe-shi, Hyogo 650-8670 (JP); TADA, Tomoki, Akashi-shi, Hyogo 673-8666 (JP)
(74) Representative: Witte, Weller & Partner Patentanwälte mbB
(86) International application number: PCT/JP2023/012639
(87) International publication number: WO 2023/190577

(57) **Abstract**

When a first traveling mode in which a driving wheel is driven by power generated by an electric motor is changed to a second traveling mode in which the driving wheel is driven by at least power generated by an engine, processing circuitry of a control device of a hybrid vehicle according to one aspect executes rotational frequency synchronization control of controlling the engine such that a rotational frequency of a transmission shaft which corresponds to rotation of the engine synchronizes with a rotational frequency of the transmission shaft which corresponds to rotation of the electric motor. During execution of the rotational frequency synchronization control, the processing circuitry controls a clutch such that a degree of engagement of the clutch which corresponds to a degree of power transmission between the engine and the transmission shaft increases.

## Description

### Technical Field

### Cross-Reference to Related Applications

This application claims priority to and the benefit of Japanese Patent Application No. 2022-53378 filed on March 29, 2022 and Japanese Patent Application No. 2022-208059 filed on December 26, 2022, the entire disclosures of which are incorporated herein by reference in their entirety.

### Field

The present disclosure relates to a control device of a hybrid vehicle including an engine and an electric motor as traveling driving sources.

### Background Art

PTL 1 discloses a hybrid vehicle including an engine and an electric motor as traveling driving sources. This hybrid vehicle includes: a transmission shaft that transmits driving power of the electric motor to a driving wheel; and a clutch that switches whether to transmit driving power of the engine to the transmission shaft. The hybrid vehicle travels while switching the clutch from a disengaged state to an engaged state to switch among a traveling mode (first traveling mode) in which the hybrid vehicle travels by driving the electric motor, a traveling mode (second traveling mode) in which the hybrid vehicle travels by transmitting at least the driving power of the engine to the transmission shaft, and the like in accordance with a battery remaining amount and the like. In the first traveling mode, since the hybrid vehicle travels by driving the electric motor, the driving of the engine is unnecessary.

To change the traveling mode from the first traveling mode to the second traveling mode, it is necessary to execute rotational frequency synchronization control of controlling the engine to synchronize a transmission shaft rotational frequency corresponding to the rotation of the engine with a transmission shaft rotational frequency corresponding to the rotation of the electric motor.

### Citation List

### Patent Literature

PTL 1: Japanese Laid-Open Patent Application Publication No. 2021-95015

### Summary of Invention

### Technical Problem

It is desired to reduce a time required to change the traveling mode from the first traveling mode that does not require the driving of the engine to the second traveling mode that requires the driving of the engine.

An object of the present disclosure is to provide a control device of a hybrid vehicle which can reduce a time required to change a traveling mode from a first traveling mode that does not require the driving of an engine to a second traveling mode that requires the driving of the engine.

### Solution to Problem

A control device of a hybrid vehicle according to one aspect of the present disclosure is a control device of a hybrid vehicle, the hybrid vehicle including: an electric motor and an engine as traveling driving sources; a transmission shaft that transmits driving power of the electric motor to a driving wheel; and a clutch that switches whether to transmit driving power of the engine to the transmission shaft, the control device including processing circuitry. When a first traveling mode in which the driving wheel is driven by the power generated by the electric motor is changed to a second traveling mode in which the driving wheel is driven by at least the power generated by the engine, the processing circuitry executes rotational frequency synchronization control of controlling the engine such that a rotational frequency of the transmission shaft which corresponds to rotation of the engine synchronizes with a rotational frequency of the transmission shaft which corresponds to rotation of the electric motor. During execution of the rotational frequency synchronization control, the processing circuitry controls the clutch such that a degree of engagement of the clutch which corresponds to a degree of power transmission between the engine and the transmission shaft increases.

A control device of a hybrid vehicle according to another aspect of the present disclosure may be a control device of a hybrid vehicle, the hybrid vehicle including: an electric motor and an engine as traveling driving sources; a transmission shaft that transmits driving power of the electric motor to a driving wheel; and a clutch that switches whether to transmit driving power of the engine to the transmission shaft, the control device including processing circuitry. When a first traveling mode in which the driving wheel is driven by the power generated by the electric motor is changed to a second traveling mode in which the driving wheel is driven by at least the power generated by the engine, the processing circuitry may execute rotational frequency synchronization control of controlling the engine such that a rotational frequency of the transmission shaft which corresponds to rotation of the engine synchronizes with a rotational frequency of the transmission shaft which corresponds to rotation of the electric motor. During execution of the rotational frequency synchronization control, the processing circuitry may control the clutch such that a power transmission state between the engine and the transmission shaft increases with time. Based on a traveling state or a driving operation state, the processing circuitry may change a time required to change the clutch from a disengaged state to an engaged state or change an initial target value of an output of the engine in the rotation synchronization control.

### Advantageous Effects of Invention

The present disclosure can reduce a time required to change a traveling mode from a first traveling mode that does not require the driving of an engine to a second traveling mode that requires the driving of the engine.

### Brief Description of Drawings

FIG. 1 is a schematic diagram showing a hybrid vehicle according to one embodiment.
FIG. 2 is a block diagram showing a control device and its inputs and outputs.
FIG. 3 is a flowchart showing the flow of processing of switching control from an EV mode to a HEV mode in the present embodiment.
FIG. 4 shows graphs of time changes of values in the switching control shown in FIG. 3.
FIG. 5 is a block diagram showing a function of setting a second throttle target opening degree in an engine rotational frequency control module.
FIG. 6 is a diagram showing a first shock tolerance map.
FIG. 7 is a block diagram showing a function of determining a final throttle target opening degree in a throttle opening degree determining module.
FIG. 8 is a block diagram showing a function of determining a clutch pressure command value in a clutch control module.
FIG. 9 is a diagram showing a second shock tolerance map.
FIG. 10 is a diagram showing a clutch pressure map.

### Description of Embodiments

Hereinafter, embodiments will be described with reference to the drawings.

### Configuration of Hybrid Vehicle

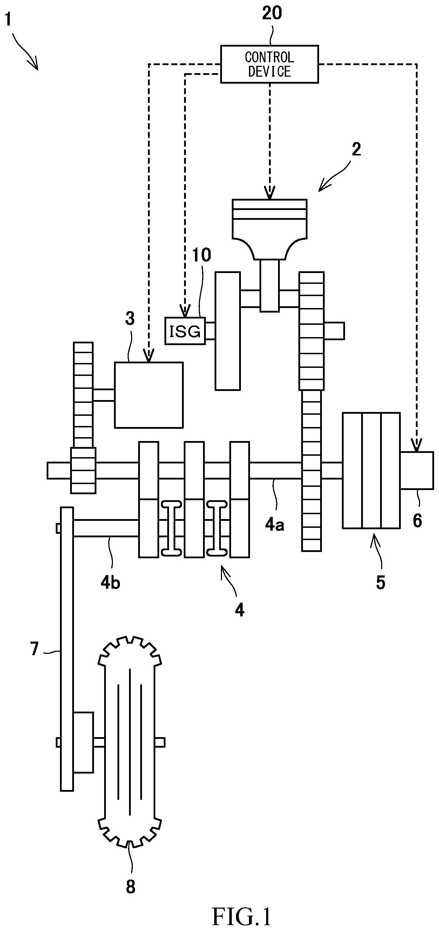

FIG. 1 is a schematic diagram showing a hybrid vehicle 1 according to one embodiment. In the present embodiment, the hybrid vehicle 1 is a motorcycle including: a rear wheel that is a driving wheel 8; and a front wheel (not shown) that is a driven wheel. The motorcycle is a preferable example of a vehicle that can turn while banking a vehicle body of the vehicle toward one side in a vehicle width direction from an upright state. The hybrid vehicle 1 may be a three-wheeled vehicle or a four-wheeled vehicle.

The hybrid vehicle 1 includes: an electric motor 3; an engine 2; a transmission shaft (an input shaft 4a of a transmission 4 described below) that transmits driving power of the electric motor 3 to the driving wheel 8; and a clutch 5 that switches whether to transmit driving power of the engine 2 to the transmission shaft.

More specifically, as shown in FIG. 1, the hybrid vehicle 1 includes the engine 2, the electric motor 3, the transmission 4, the clutch 5, a clutch actuator 6, an output transmitting member 7, the driving wheel 8, a starter motor 10, and a control device 20.

The engine 2 is an internal combustion engine. The engine 2 is a traveling driving source that drives the driving wheel 8. The electric motor 3 is a traveling driving source that drives the driving wheel 8 together with the engine 2 or instead of the engine 2. The transmission 4 changes the speed of rotational power output from the engine 2. The transmission 4 is, for example, a manual transmission including the input shaft 4a, an output shaft 4b, and a transmission gear. In the present embodiment, the above transmission shaft is configured as the input shaft 4a of the transmission 4.

The clutch 5 connects the engine 2 with the transmission 4 and disconnects the engine 2 from the transmission 4. The clutch 5 is, for example, a friction clutch. The clutch actuator 6 drives the clutch 5 such that the clutch 5 switches between an engaged state and a disengaged state. In the present embodiment, the clutch actuator 6 is a hydraulic actuator. The clutch actuator 6 may be another type of actuator, such as an electric actuator.

The disengaged state of the clutch 5 is a state where the power is not transmitted between the engine 2 and the input shaft 4a that is the transmission shaft. The engaged state of the clutch 5 is a state where the power is completely transmitted between the engine 2 and the input shaft 4a that is the transmission shaft. When the clutch 5 changes from the disengaged state to the engaged state, the clutch 5 changes through a half-engaged state. The half-engaged state of the clutch 5 is a state where the power is partially transmitted between the engine 2 and the input shaft 4a that is the transmission shaft.

In other words, the clutch actuator 6 is an actuator that changes the degree of engagement of the clutch 5, i.e., the degree of power transmission between the engine 2 and the transmission 4. The degree of engagement of the clutch 5 is a value that increases as frictional force generated at the clutch 5 increases. The disengaged state of the clutch 5 is a state where the degree of engagement of the clutch 5 is 0%. The engaged state of the clutch 5 is a state where the degree of engagement of the clutch 5 is 100%. The half-engaged state of the clutch 5 is a state where the degree of engagement of the clutch 5 is more than 0% and less than 100%.

In other words, when the clutch 5 includes a driving member and a driven member which can contact each other and separate from each other, and the rotational power is transmitted from the driving member to the driven member by the frictional force between the driving member and the driven member, the engaged state of the clutch 5 is a state where the rotational power is transmitted without generating a slip between the driving member and the driven member. Moreover, the half-engaged state of the clutch 5 is a state where the rotational power is transmitted while generating the slip between the driving member and the driven member.

The output transmitting member 7 is a member that transmits the rotational power, which is output from the output shaft 4b of the transmission 4, to the driving wheel 8. The output transmitting member 7 is, for example, a drive chain, a drive belt, a drive shaft, or the like.

When starting the engine 2, the starter motor 10 applies the rotational power to a crank shaft of the engine 2 to drive the engine 2. The starter motor 10 is attached to one end portion of the crank shaft of the engine 2. In the present embodiment, the starter motor 10 is, for example, an integrated starter generator (ISG). To be specific, the starter motor 10 can drive the engine 2 when starting the engine 2 and can generate electric power by being driven by the engine 2. However, the starter motor 10 does not have to be the ISG and may be a motor that has a function of driving the engine 2 when starting the engine 2.

The control device 20 controls the engine 2, the electric motor 3, the clutch actuator 6, and the starter motor 10 based on information of various sensors. The control device 20 may be a single controller or may be controllers located distributedly. The control device 20 includes a processor, a volatile memory, a non-volatile memory, an I/O interface, and the like in terms of hardware. Details of functions of the control device 20 will be described later.

The hybrid vehicle 1 includes traveling modes which are different from each other regarding at least one of the states of the engine 2, the electric motor 3, and the clutch 5. The traveling modes of the hybrid vehicle 1 are switched by the control device 20. Specifically, the traveling modes include a first traveling mode, a second traveling mode, and a transition mode.

The first traveling mode is a traveling mode that does not require the driving of the engine 2. In other words, the first traveling mode is a traveling mode in which the hybrid vehicle 1 travels with the clutch 5 in the disengaged state. For example, the first traveling mode is an EV mode in which the driving wheel 8 is driven by the power generated by the electric motor 3. In the EV mode, the clutch 5 becomes the disengaged state such that the engine 2 does not become resistance when the electric motor 3 drives. In the EV mode, the electric motor 3 becomes a driving state at the time of acceleration and becomes a regenerative state at the time of deceleration. Basically, in the EV mode, the engine 2 is in a stop state. However, in the EV mode, the engine 2 may drive at low load for warming up, for example. This is because when the engine 2 is driving, and the clutch 5 is in the disengaged state, the power generated by the engine 2 is not transmitted to the driving wheel 8.

The second traveling mode is a mode in which the driving wheel 8 is driven by at least the power generated by the engine 2. In other words, the second traveling mode is a traveling mode in which the hybrid vehicle 1 travels with the clutch 5 in the engaged state. For example, the second traveling mode is a HEV mode in which the driving wheel 8 is driven by both of the power generated by the electric motor 3 and the power generated by the engine 2. Moreover, for example, in the HEV mode, the engine 2 may be driven without driving the electric motor 3, and the driving wheel 8 may be driven only by the rotational power of the engine 2. In the HEV mode, the clutch 5 becomes the engaged state such that the rotational power of the engine 2 is transmitted to the driving wheel 8 through the transmission 4. In the HEV mode, the electric motor 3 becomes the driving state at the time of the acceleration and assists the rotation of the transmission shaft driven by the engine 2. Moreover, in the HEV mode, the electric motor 3 becomes the regenerative state at the time of the deceleration.

The transition mode is a switch control mode that is between the EV mode and the HEV mode when the EV mode is changed to the HEV mode. In the present embodiment, the transition mode includes different control states, such as a rotational frequency synchronization control state and a torque change control state. When changing the traveling mode from the EV mode to the HEV mode with the engine 2 in the stop state, the transition mode also includes an engine start state that is a state where control of starting the engine 2 is performed. Switching of the traveling mode by the control device 20 will be described later in detail.

### Control System

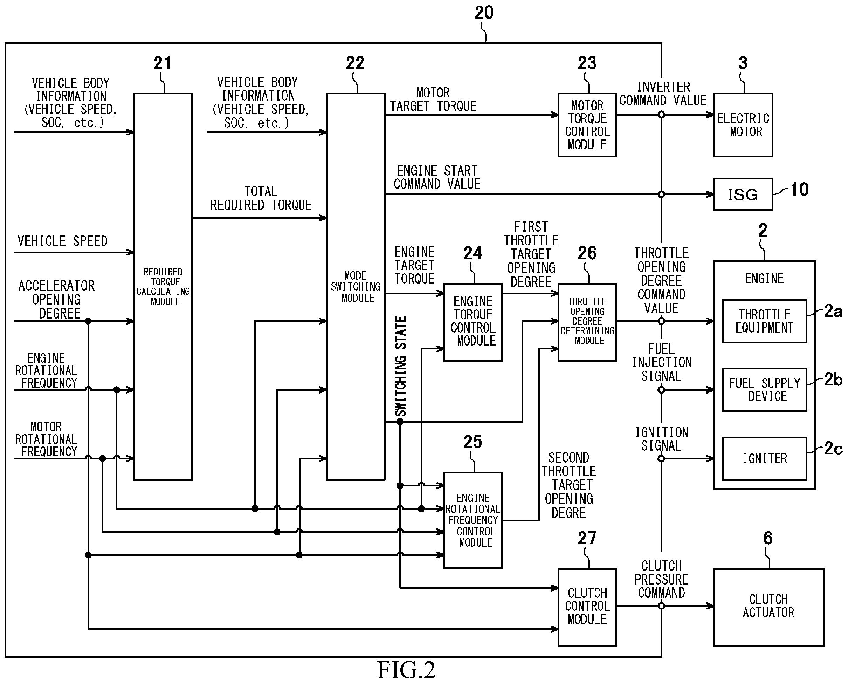

FIG. 2 is a block diagram showing the control device 20 and its inputs and outputs. As shown in FIG. 2, the control device 20 includes a required torque calculating module 21, a mode switching module 22, a motor torque control module 23, an engine torque control module 24, an engine rotational frequency control module 25, a throttle opening degree determining module 26, and a clutch control module 27. Each of these modules 21 to 27 of the control device 20 is configured as a functional block that is realized in such a manner that the processor performs calculation processing by using the volatile memory based on a program stored in the non-volatile memory. The processor is one example of processing circuitry.

The required torque calculating module 21 calculates required torque from a vehicle body posture, a SOC (State Of Charge), a vehicle speed, an accelerator opening degree, an engine rotational frequency, a motor rotational frequency, and the like.

The vehicle body posture includes, for example, at least one of a roll angle (i.e., a bank angle), a pitch angle, a slip ratio, a steering angle, direction indicator information, vehicle position information, or front camera information. The roll angle and the pitch angle are calculated by, for example, a detected value of a gyro sensor mounted on the vehicle but may be calculated from a detected value of a roll angle sensor and a detected value of a pitch angle sensor. The pitch angle may be calculated from a stroke amount of a front suspension and a stroke amount of a rear suspension.

The slip ratio is calculated by, for example, a formula "(driving wheel rotational frequency - driven wheel rotational frequency)/driven wheel rotational frequency," but may be, for example, an increasing rate of the driving wheel rotational frequency. The steering angle is, for example, calculated from a detected value of a steering angle sensor. The direction indicator information is acquired as left-turn indicator operation information or right-turn indicator operation information based on a signal generated when a user has operated a direction indicator. The vehicle position information is information indicating a traveling position of the hybrid vehicle 1 on a map based on a detected value of a GPS sensor and map information. The front camera information is image information acquired from an onboard camera that takes an image of a front side of the hybrid vehicle 1.

The SOC indicates the state of charge of a battery that stores electric power to be supplied to the electric motor 3. For example, the SOC is detected by a battery management unit that is located at the battery and controls the battery.

The vehicle speed is calculated from, for example, a detected value of a rotational frequency sensor of the driven wheel (for example, the front wheel) but may be calculated from GPS information or the like. The motor rotational frequency is calculated by, for example, a detected value of a rotational frequency sensor located at a rotating shaft of the electric motor 3 but may be calculated from a control signal of the electric motor 3. The accelerator opening degree denotes an accelerator operation amount of the user and can be acquired from an output of an accelerator opening degree sensor. The engine rotational frequency can be calculated from an output of a crank angle sensor that detects a crank angle of the crank shaft of the engine 2.

The required torque calculating module 21 calculates the required torque, specifically, torque to be output from all the traveling driving sources (the engine 2 and the electric motor 3) as total required torque based on various types of information described above.

The mode switching module 22 recognizes a current traveling state based on the total required torque and the like and then determines an optimal traveling mode from the above traveling modes. The traveling mode may be determined based on the total required torque, and in addition, the vehicle body posture, the SOC (State Of Charge), the vehicle speed, the accelerator opening degree, the engine rotational frequency, the motor rotational frequency, another parameter, or the like.

When the current traveling mode and the determined optimal traveling mode are different from each other, the mode switching module 22 determines to switch the current traveling mode to the optimal traveling mode. For example, when the mode switching module 22 determines to switch the EV mode to the HEV mode, the mode switching module 22 changes the current control state from the control state for the EV mode to the engine start state, the rotational frequency synchronization control state, and the torque change control state in this order and finally to the control state for the HEV mode. Moreover, the mode switching module 22 generates (outputs) switching state information indicating the current control state.

Moreover, when the mode switching module 22 has changed the current control state from the control state for the EV mode to the engine start state, the mode switching module 22 transmits an engine start command value to the starter motor 10 to start the engine 2.

Moreover, the mode switching module 22 distributes the total required torque to the electric motor 3 and the engine 2 in accordance with the current control state. To be specific, the mode switching module 22 determines target torque to be output by the engine 2 (hereinafter referred to as "engine target torque") and target torque to be output by the electric motor 3 (hereinafter referred to as "motor target torque") in accordance with the determined traveling mode and the total required torque.

The motor torque control module 23 transmits an inverter command value to (an inverter of) the electric motor 3 in accordance with the motor target torque output from the mode switching module 22 to drive the electric motor 3 such that output torque of the electric motor 3 becomes the motor target torque.

The engine torque control module 24 determines a target value of a throttle opening degree (hereinafter referred to as a "first throttle target opening degree") based on the engine target torque output from the mode switching module 22 and the engine rotational frequency.

Based on the engine rotational frequency and the motor rotational frequency, the engine rotational frequency control module 25 determines such a target value of the throttle opening degree (hereinafter referred to as a "second throttle target opening degree") that the engine rotational frequency synchronizes with the motor rotational frequency.

The throttle opening degree determining module 26 determines a final throttle opening degree command value to be output to the engine 2 and outputs it to throttle equipment 2a. Moreover, the control device 20 outputs a fuel injection signal corresponding to an actual measurement value of the throttle opening degree to a fuel injector 2b of the engine 2 and also outputs an engine ignition signal to an igniter 2c of the engine 2.

The clutch control module 27 outputs to the clutch actuator 6 a clutch pressure command value that changes the degree of engagement of the clutch 5.

### Switching from EV Mode to HEV Mode

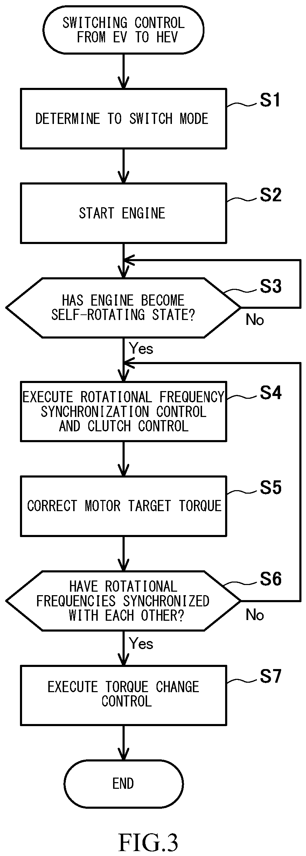

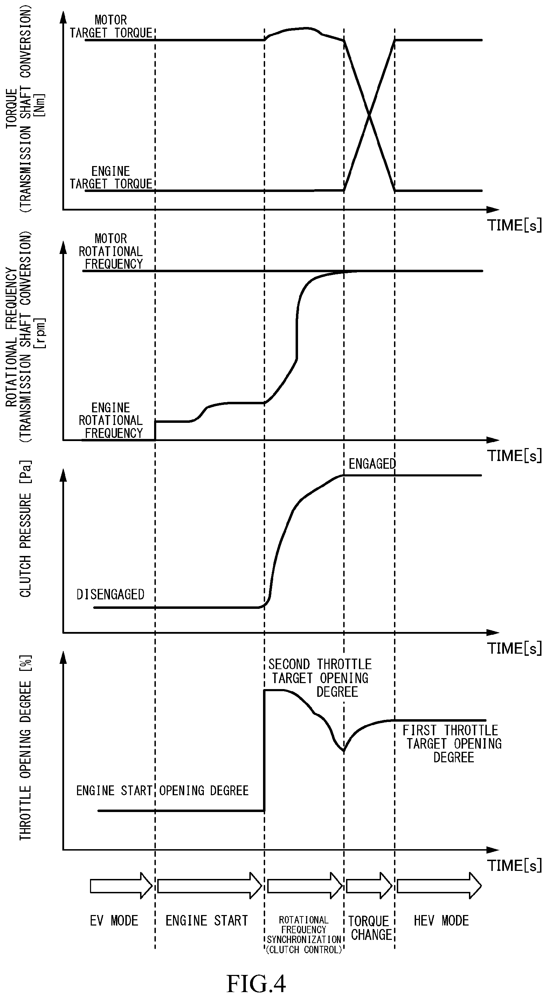

Hereinafter, the flow of processing of switching the traveling mode from the EV mode to the HEV mode will be described. FIG. 3 is a flowchart showing the flow of the processing of switching control from the EV mode to the HEV mode in the present embodiment. Moreover, FIG. 4 shows graphs of time changes of values in the switching control shown in FIG. 3. The following will describe the processing of the switching control when switching the EV mode to the HEV mode with the engine 2 in the stop state.

FIG. 4 shows a graph showing the target torque of the engine 2 and the target torque of the electric motor 3, a graph showing the rotational frequency of the engine 2 and the rotational frequency of the electric motor 3, a graph showing clutch pressure that is pressure by which the clutch actuator 6 is operated, and a graph showing the throttle opening degree, in this order from an upper side. In the graphs of FIG. 4, each target torque is a conversion value of the target torque at the transmission shaft (the input shaft 4a of the transmission 4), and each rotational frequency is a conversion value of the rotational frequency at the transmission shaft (the input shaft 4a of the transmission 4).

Moreover, in the graph of FIG. 4, the clutch pressure of the present embodiment is control hydraulic pressure. The clutch pressure is a parameter corresponding to the degree of engagement of the clutch 5, in other words, a parameter corresponding to the degree of transmission of the power between the engine 2 and the transmission 4. When the clutch pressure is preset minimum pressure, the degree of engagement of the clutch 5 is 0%, and the clutch 5 is in the disengaged state. Then, the degree of engagement increases as the clutch pressure increases. When the clutch pressure is preset maximum pressure, the degree of engagement of the clutch 5 is 100%, and the clutch 5 is in the engaged state.

As described above, in the EV mode, the clutch 5 is in the disengaged state, and the driving wheel 8 is driven by the power generated by the electric motor 3. When the hybrid vehicle 1 is traveling in the EV mode, and the mode switching module 22 recognizes the current traveling state based on the total required torque and the like and determines that the HEV mode is the optimal traveling mode, the mode switching module 22 determines to switch the EV mode to the HEV mode (Step S 1). Switching from the EV mode to the HEV mode may be determined by manual operation of a rider.

### Engine Start

When switching from the EV mode to the HEV mode is determined, the mode switching module 22 changes the current control state from the control state for the EV mode to the engine start state. Then, the mode switching module 22 starts the engine 2 such that the engine 2 changes from the stop state to a self-rotating state in which the engine 2 rotates by itself (Step S2).

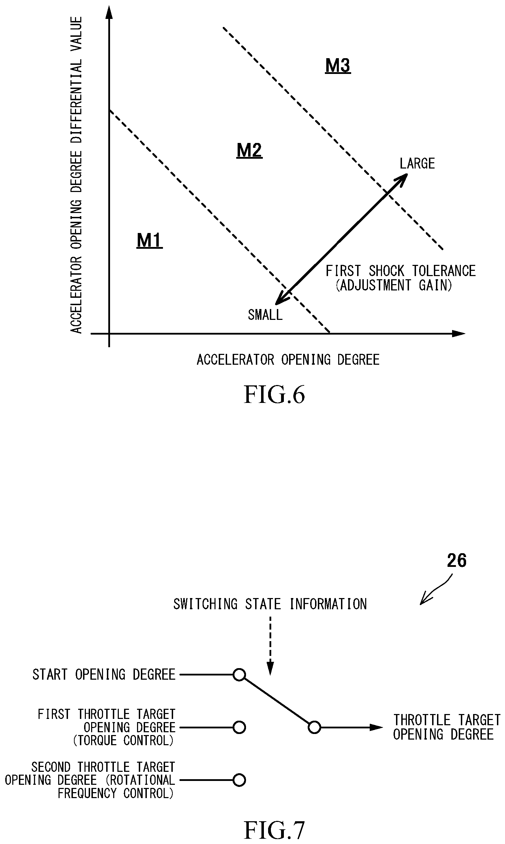

Specifically, the mode switching module 22 outputs the engine start command value to the starter motor 10 to start the engine 2 by the starter motor 10. Moreover, the mode switching module 22 transmits the switching state information indicating the engine start state to the throttle opening degree determining module 26. Based on the switching state information indicating the engine start state, the throttle opening degree determining module 26 outputs a throttle opening degree command value indicating a preset engine start opening degree to the throttle equipment 2a (also see FIG. 7 described later).

The mode switching module 22 determines whether or not the engine 2 has become the self-rotating state (Step S3). Specifically, the mode switching module 22 determines whether or not the engine rotational frequency has become a start reference value or more and whether or not a predetermined period of time has elapsed since the engine rotational frequency has become the start reference value or more. When the predetermined period of time has elapsed since the engine rotational frequency has become the start reference value or more (also see FIG. 4), the mode switching module 22 determines that the engine 2 has become the self-rotating state. When the engine rotational frequency has become the start reference value or more, the mode switching module 22 may determine that the engine 2 has become the self-rotating state.

While the engine 2 is not in the self-rotating state (No in Step S3), the mode switching module 22 continues to monitor the engine rotational frequency until the engine rotational frequency becomes the start reference value or more. When the mode switching module 22 determines that the engine 2 has become the self-rotating state (Yes in Step S3), the mode switching module 22 changes the current control state from the engine start state to the rotational frequency synchronization control state. Thus, the rotational frequency synchronization control state and clutch control are started (Step S4).

The rotational frequency synchronization control is control of making the rotational frequency of the input shaft (i.e., the transmission shaft) 4a which corresponds to the rotation of the engine 2 synchronize with the rotational frequency of the input shaft 4a which corresponds to the rotation of the electric motor 3. Moreover, the clutch control is control of switching the state of the clutch 5 from the disengaged state to the engaged state. Hereinafter, the rotational frequency synchronization control and the clutch control will be described in more detail.

### Rotational Frequency Synchronization Control

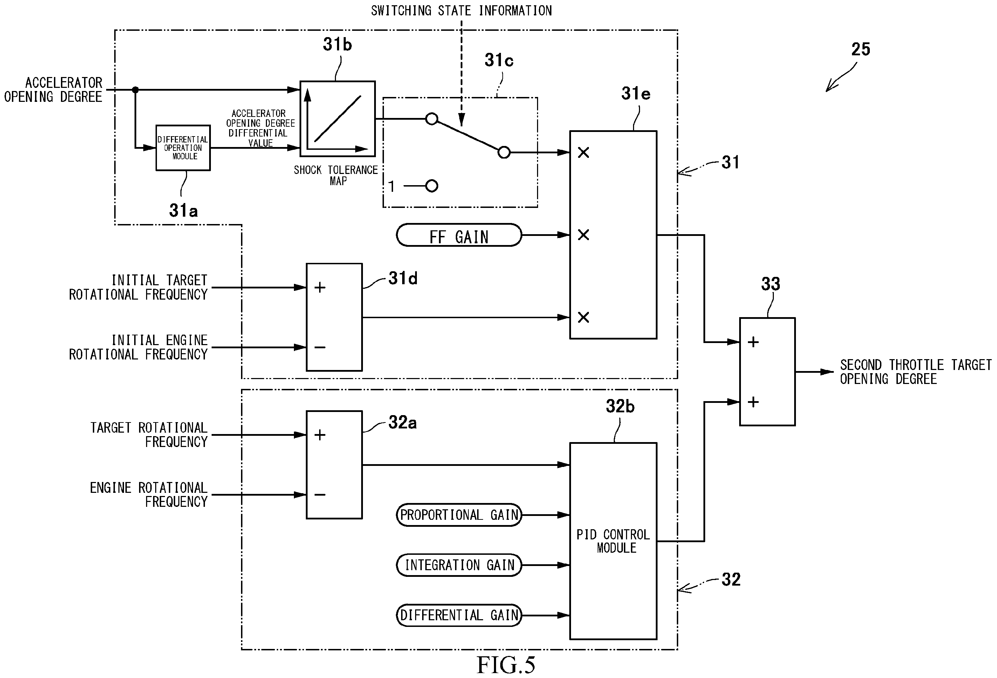

First, the rotational frequency synchronization control will be described with reference to FIGS. 5 to 7. FIG. 5 is a block diagram showing a function of setting the second throttle target opening degree in the engine rotational frequency control module 25. In the rotational frequency synchronization control, the control device 20 controls the engine 2 such that the rotational frequency of the input shaft (i.e., the transmission shaft) 4a which corresponds to the rotation of the engine 2 synchronizes with the rotational frequency of the input shaft 4a which corresponds to the rotation of the electric motor 3. Specifically, based on the engine rotational frequency and the motor rotational frequency, the engine rotational frequency control module 25 determines such second throttle target opening degree that the engine rotational frequency synchronizes with the motor rotational frequency. Then, the throttle opening degree determining module 26 determines the second throttle target opening degree as the final throttle opening degree command value to be output to the engine 2 and then outputs it to the throttle equipment 2a.

The engine rotational frequency control module 25 includes a feedforward control module (hereinafter, a FF control module) 31, a feedback control module (hereinafter, a FB control module) 32, and an adding module 33.

The FF control module 31 includes a differential operation module 31a, a shock tolerance setting module 31b, a switching module 31c, a subtracting module 31d, and a multiplying module 31e.

The differential operation module 31a performs differential operation of the accelerator opening degree and outputs an accelerator opening degree differential value. The shock tolerance setting module 3 1b refers to a preset first shock tolerance map and sets a first shock tolerance that is an adjustment gain from the accelerator opening degree and the accelerator opening degree differential value which is output by the differential operation module 31a.

Based on the switching state information acquired from the mode switching module 22, the switching module 31c switches whether to output the adjustment gain, which has been set by the shock tolerance setting module 31b, to the multiplying module 31e. When the switching state information acquired from the mode switching module 22 indicates the rotational frequency synchronization control state, the switching module 31c sets the gain to be output to the multiplying module 31e, to the adjustment gain. When the switching state information acquired from the mode switching module 22 indicates a state other than the rotational frequency synchronization control state, the switching module 31c sets the gain to be output to the multiplying module 31e, to "1."

The subtracting module 31d calculates a difference between an initial target rotational frequency and an initial engine rotational frequency. The initial target rotational frequency is a target rotational frequency of the engine 2 at the start of the rotational frequency synchronization control. For example, when the target rotational frequency of the engine 2 in the rotational frequency synchronization control is the rotational frequency of the electric motor 3, the initial target rotational frequency is the rotational frequency of the electric motor 3 at the start of the rotational frequency synchronization control. The initial engine rotational frequency is the rotational frequency of the engine 2 at the start of the rotational frequency synchronization control.

The multiplying module 31e multiplies the gain determined by the switching module 31c, a preset FF gain, and the difference between the initial target rotational frequency and the initial engine rotational frequency which has been calculated by the subtracting module 31d, and outputs a FF control value.

The FB control module 32 includes a subtracting module 32a and a PID control module 32b. The subtracting module 32a calculates a difference between the target rotational frequency of the engine 2 and the engine rotational frequency. The PID control module 32b determines a FB control value by PID control using a preset proportional gain, a preset integration gain, and a preset differential gain with respect to the difference calculated by the subtracting module 32a.

The adding module 33 adds the output value (FF control value) of the FF control module 31 and the output value (FB control value) of the FB control module 32 to set the second throttle target opening degree.

The following will describe differences between the rotational frequency synchronization control performed by the engine rotational frequency control module 25 and conventional rotational frequency synchronization control. As in PTL 1 described above, in the conventional rotational frequency synchronization control, feedback control is performed to make the engine rotational frequency synchronize with the motor rotational frequency. However, in the rotational frequency synchronization control of the present embodiment, the feedforward control is combined with the feedback control. To be specific, the subtracting module 31d adds the FF control value corresponding to the difference between the initial target rotational frequency and the initial engine rotational frequency to the output value of the FB control module 32, and thus, increases the second throttle target opening degree at the time of the execution of the rotational frequency synchronization control (see FIG. 4). Therefore, quick synchronization is realized.

However, when the throttle opening degree is excessively increased, the engine rotational frequency sharply increases. When the engine rotational frequency sharply increases, shock may be generated at the vehicle body. Moreover, such shock may cause uncomfortable feeling of the rider. Therefore, in the present embodiment, the shock tolerance setting module 31b determines the degree of shock that can be accepted by an occupant in a current situation (a traveling state, a driving operation state, etc.), and outputs the adjustment gain corresponding to the result of this determination.

In the present embodiment, as a parameter for determining the current situation (for example, the traveling state or the driving operation state), more specifically, as a parameter for determining the degree of shock that can be accepted by the occupant, the accelerator opening degree and the accelerator opening degree differential value are used.

FIG. 6 is a diagram showing the first shock tolerance map. A horizontal axis represents the accelerator opening degree, and a vertical axis represents the accelerator opening degree differential value. The first shock tolerance map shows a correspondence relation between the first shock tolerance and a combination of the accelerator opening degree and the accelerator opening degree differential value. The first shock tolerance corresponds to the adjustment gain set by the shock tolerance setting module 31b. The first shock tolerance is a parameter indicating a tolerance with respect to the shock generated at the vehicle body of the hybrid vehicle 1 when the throttle opening degree is sharply changed. The first shock tolerance is a value that is variably set based on an accelerating state or an accelerating operation state.

The large accelerator opening degree indicates a state where the rider is performing an accelerating operation. Moreover, the large accelerator opening degree indicates a state where the vehicle body is accelerating. Such state may be a state where the occupant (including a rider) can accept a certain degree of shock. Therefore, in the first shock tolerance map, the first shock tolerance is set so as to increase as the accelerator opening degree increases.

Moreover, the large accelerator opening degree differential value indicates a state where the rider is currently performing the accelerating operation. Furthermore, the large accelerator opening degree differential value indicates a state where the vehicle body has started accelerating. Such state may also be a state where the occupant (including the rider) can accept a certain degree of shock. Therefore, in the first shock tolerance map, the first shock tolerance is set so as to increase as the accelerator opening degree differential value increases.

In this first shock tolerance map, when a total value of the accelerator opening degree and the accelerator differential value (or a value obtained by multiplying the accelerator differential value by a predetermined value) is less than a predetermined first reference value, i.e., is in a first region M1, the first shock tolerance becomes a preset first set value. When the total value is not less than the first reference value and less than a predetermined second reference value larger than the first reference value, i.e., is in a second region M2, the first shock tolerance becomes a preset second set value larger than the first set value. When the total value is not more than a predetermined third reference value larger than the second reference value, i.e., is in a third region M3, the first shock tolerance becomes a preset third set value larger than the second set value.

To be specific, the first shock tolerance is relatively small in the first region M1 located at a lower-left portion in the first shock tolerance map, and the first shock tolerance is relatively large in the third region M3 located at an upper-right portion in the first shock tolerance map.

The first shock tolerance map shown in FIG. 6 shows that the combination of the accelerator opening degree and the accelerator opening degree differential value corresponds to any one of the three set values. However, this first shock tolerance map is merely one example. For example, the first shock tolerance map may show that the combination of the accelerator opening degree and the accelerator opening degree differential value corresponds to any one of two set values or any one of four or more set values.

FIG. 7 is a block diagram showing a function of determining the final throttle target opening degree in the throttle opening degree determining module 26.

Based on the switching state information acquired from the mode switching module 22, the throttle opening degree determining module 26 determines the final throttle opening degree to be output to the engine 2 from among a start opening degree, a first throttle opening degree, and a second throttle opening degree, and outputs it to the throttle equipment 2a. The first throttle opening degree is the throttle target opening degree output by the engine torque control module 24. The second throttle opening degree is the throttle target opening degree output by the engine rotational frequency control module 25.

For example, when the switching state information indicates the engine start state, the throttle opening degree determining module 26 determines the start opening degree as the final throttle target opening degree and outputs it. Moreover, for example, when the switching state information indicates the torque change control state, the throttle opening degree determining module 26 determines the first throttle opening degree as the final throttle target opening degree and outputs it.

Furthermore, for example, when the switching state information indicates the rotational frequency synchronization control state, the throttle opening degree determining module 26 determines the second throttle opening degree corresponding to the first shock tolerance as the final throttle target opening degree and outputs it. Therefore, during the rotational frequency synchronization control, the control device 20 increases the throttle opening degree of the the engine 2 as the first shock tolerance increases. As above, in the present embodiment, based on the traveling state or driving operation state of the hybrid vehicle 1, the control device 20 changes an initial target value of an output of the engine in rotation synchronization control, specifically, the throttle target opening degree at the start of the rotation synchronization control.

### Clutch Control

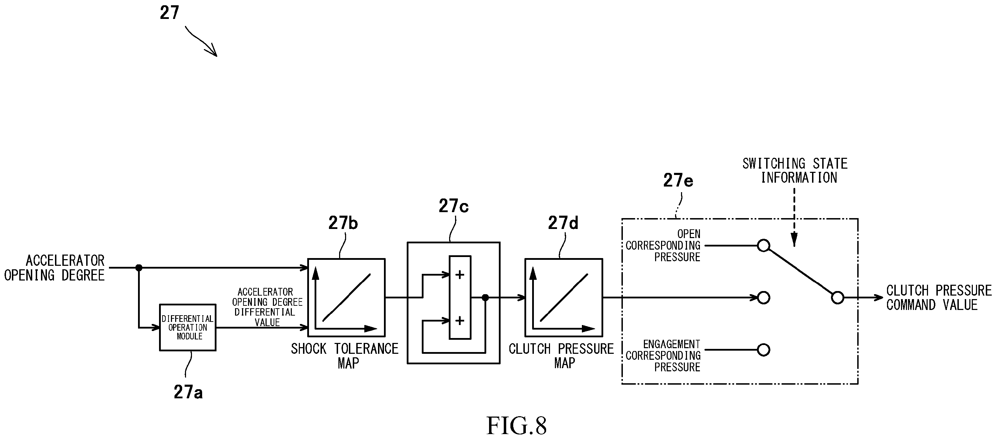

First, the rotational frequency synchronization control will be described with reference to FIGS. 8 to 10. FIG. 8 is a block diagram showing a function of determining the clutch pressure command value in the clutch control module 27.

The clutch control module 27 includes a differential operation module 27a, a shock tolerance setting module 27b, an integrating module 27c, a clutch pressure setting module 27d, and a clutch pressure determining module 27e.

The differential operation module 27a performs differential operation of the accelerator opening degree and outputs the accelerator opening degree differential value. The shock tolerance setting module 27b refers to a preset second shock tolerance map and sets a second shock tolerance that is a clutch pressure parameter, from the accelerator opening degree and the accelerator opening degree differential value which is output by the differential operation module 27a.

The integrating module 27c integrates the clutch pressure parameter output by the shock tolerance setting module 27b.

The clutch pressure setting module 27d refers to a preset clutch pressure map and determines the clutch pressure command value from the integrated value of the shock tolerance which is output by the integrating module 27c.

Based on the switching state information acquired from the mode switching module 22, the clutch pressure determining module 27e determines the final clutch pressure command value to be output to the clutch actuator 6 from among open corresponding pressure, engagement corresponding pressure, and clutch pressure which is set by the clutch pressure setting module 27d, and outputs it to the clutch actuator 6.

For example, when the switching state information indicates the EV mode or the engine start state, the clutch pressure determining module 27e determines the open corresponding pressure as the final clutch pressure command value to be output to the clutch actuator 6, and outputs it. Moreover, for example, when the switching state information indicates the torque change control state or the HEV mode, the clutch pressure determining module 27e determines the engagement corresponding pressure as the final clutch pressure command value to be output to the clutch actuator 6, and outputs it. Furthermore, for example, when the switching state information indicates the rotational frequency synchronization control state, the clutch pressure determining module 27e determines the clutch pressure set by the clutch pressure setting module 27d, as the final clutch pressure command value to be output to the clutch actuator 6, and outputs it.

The clutch control by the clutch pressure determining module 27e will be described in more detail. The clutch control in the present embodiment starts simultaneously with the rotational frequency synchronization control. Then, during the execution of the rotational frequency synchronization control, the clutch control module 27 controls the clutch 5 such that the clutch 5 becomes the half-engaged state. More specifically, during the execution of the rotational frequency synchronization control, the clutch control module 27 controls the clutch 5 (more specifically, the clutch actuator 6) such that the degree of engagement of the clutch 5 increases. During the execution of the rotational frequency synchronization control, the clutch control module 27 may gradually increase the degree of engagement of the clutch 5 with time or may stepwisely increase the degree of engagement of the clutch 5 with time. By setting the clutch 5 to the half-engaged state during the execution of the rotational frequency synchronization control, the frictional force of the clutch 5 is transmitted to the engine 2 so as to increase the engine rotational frequency, and as a result, quicker synchronization than when the engine rotational frequency is increased with the clutch 5 in the disengaged state is realized.

However, when the degree of engagement of the clutch 5 increases, shock may be generated at the vehicle body. Moreover, such shock may cause uncomfortable feeling of the rider. Therefore, in the present embodiment, the shock tolerance setting module 27b determines the degree of shock that can be accepted by the occupant in the current situation (the traveling state, the driving operation state, etc.), and adjusts speed of increasing the degree of engagement of the clutch 5 in accordance with the result of this determination.

In the present embodiment, as a parameter for determining the current situation (for example, the traveling state or the driving operation state), more specifically, as a parameter for determining the degree of shock that can be accepted by the occupant, the accelerator opening degree and the accelerator opening degree differential value are used.

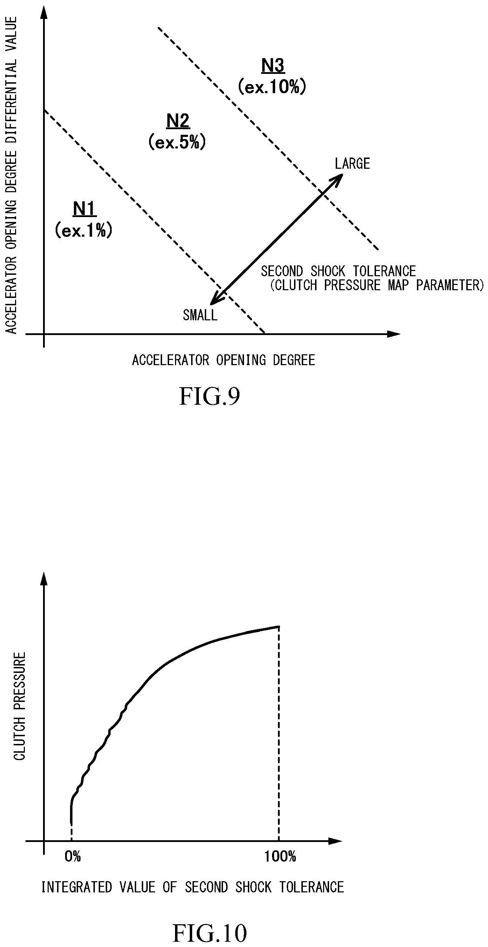

FIG. 9 is a diagram showing the second shock tolerance map. A horizontal axis represents the accelerator opening degree, and a vertical axis represents the accelerator opening degree differential value. The second shock tolerance map shows a correspondence relation between the second shock tolerance and a combination of the accelerator opening degree and the accelerator opening degree differential value. Since the second shock tolerance is a parameter used by the clutch pressure setting module 27d, it may also be called the clutch pressure parameter. The second shock tolerance is a parameter indicating a tolerance with respect to the shock generated at the vehicle body of the hybrid vehicle 1 when the state of the clutch 5 is changed. The second shock tolerance is a value that is variably set based on the accelerating state or the accelerating operation state.

The large accelerator opening degree indicates a state where the rider is performing the accelerating operation. Moreover, the large accelerator opening degree indicates a state where the vehicle body is accelerating. Such state may be a state where the occupant (including a rider) can accept a certain degree of shock. Therefore, in the second shock tolerance map, the second shock tolerance is set so as to increase as the accelerator opening degree increases.

Moreover, the large accelerator opening degree differential value indicates a state where the rider is currently performing the accelerating operation. Furthermore, the large accelerator opening degree differential value indicates a state where the vehicle body has started accelerating. Such state may also be a state where the occupant (including the rider) can accept a certain degree of shock. Therefore, in the second shock tolerance map, the second shock tolerance is set so as to increase as the accelerator opening degree differential value increases.

In this second shock tolerance map, when a total value of the accelerator opening degree and the accelerator differential value (or a value obtained by multiplying the accelerator differential value by a predetermined value) is less than a predetermined first reference value, i.e., is in a first region N1, the second shock tolerance becomes a preset first parameter value. When the total value is not less than the first reference value and less than a predetermined second reference value larger than the first reference value, i.e., is in a second region N2, the second shock tolerance becomes a preset second parameter value larger than the first parameter value. When the total value is not more than a predetermined third reference value larger than the second reference value, i.e., is in a third region N3, the second shock tolerance becomes a preset third parameter value larger than the second parameter value.

To be specific, the first shock tolerance corresponding to the first region N1 located at a lower-left portion in the second shock tolerance map is relatively small, and the second shock tolerance corresponding to the third region N3 located at an upper-right portion in the second shock tolerance map is relatively large. In the present embodiment, the first shock tolerance (first parameter value) corresponding to the first region N1 is 1%, the first shock tolerance (second parameter value) corresponding to the second region N2 is 5%, and the first shock tolerance (third parameter value) corresponding to the third region N3 is 10%.

The second shock tolerance map shown in FIG. 9 shows that the combination of the accelerator opening degree and the accelerator opening degree differential value corresponds to any one of the three parameter values. However, this second shock tolerance map is merely one example. For example, the second shock tolerance map may show that the combination of the accelerator opening degree and the accelerator opening degree differential value corresponds to any one of two parameter values or any one of four or more parameter values.

FIG. 10 is a diagram showing the clutch pressure map. A horizontal axis represents the integrated value of the clutch pressure parameter which is output by the integrating module 27c, i.e., the integrated value of the second shock tolerance. A vertical axis represents the clutch pressure (command value).

The clutch pressure map shows a correspondence relation between the integrated value of the second shock tolerance and the clutch pressure. When the integrated value of the second shock tolerance is 0%, the clutch pressure is preset minimum pressure, and the clutch 5 is in the disengaged state. When the integrated value of the second shock tolerance is 100%, the clutch pressure is preset maximum pressure, and the clutch 5 is in the engaged state.

Each time the second shock tolerance (clutch pressure parameter) is output from the shock tolerance setting module 27b, the integrated value of the second shock tolerance increases from 0% toward 100%. Moreover, as shown in FIG. 10, in the clutch pressure map, the clutch pressure increases as the integrated value of the second shock tolerance increases. Therefore, as the second shock tolerance (clutch pressure parameter) output from the shock tolerance setting module 27b increases, the integrated value of the second shock tolerance quickly increases, and as a result, the clutch pressure (in other words, the degree of engagement of the clutch 5) quickly increases.

As above, based on the traveling state or driving operation state of the hybrid vehicle 1, the control device 20 changes a time required to change the clutch 5 from the disengaged state to the engaged state. In the clutch control of the present embodiment, when the second shock tolerance is large, the degree of engagement of the clutch 5 is quickly increased. Moreover, when the second shock tolerance is small, the degree of engagement of the clutch 5 is gently increased. In other words, as the second shock tolerance increases, the control device 20 reduces a half-engaged time that is a time from when the clutch 5 is set to the half-engaged state until when the clutch is set to the engaged state.

In the example of FIG. 4, the half-engaged time that is the time from when the clutch 5 is set to the half-engaged state until when the clutch is set to the engaged state corresponds to a time from the start of the clutch control until the end of the clutch control. However, the half-engaged time is not limited to this. For example, when the clutch pressure is close to the minimum pressure, and the degree of engagement of the clutch 5 does not increase, a start point of the half-engaged time may be a time point slightly after the start time point of the clutch control.

Calculations of the modules during the clutch control are executed at predetermined time intervals. Moreover, all the second shock tolerances (in the present embodiment, the first parameter value, the second parameter value, and the third parameter value) obtained from the second shock tolerance map are positive values. Therefore, each time the clutch control module 27 performs calculation, the integrated value of the second shock tolerance which is integrated by the integrating module 27c increases. Thus, during the execution of the rotational frequency synchronization control, the control device 20 controls the clutch 5 (more specifically, the clutch actuator 6) such that the degree of engagement of the clutch 5 increases with time. The minimum value of the second shock tolerance obtained from the second shock tolerance map may be zero. For example, the first parameter value may be zero.

Referring back to FIG. 3, during the clutch control, the mode switching module 22 corrects the motor target torque such that the decrease in the motor rotational frequency by the increase in the degree of engagement of the clutch 5 is suppressed (Step S5). During the clutch control, the mode switching module 22 corrects the motor target torque in such a manner that loss torque generated at the electric motor 3 in accordance with the degree of engagement of the clutch 5 is added to the required torque of the electric motor 3.

The mode switching module 22 determines whether or not a transmission shaft rotational frequency corresponding to the rotation of the engine 2 has synchronized with a transmission shaft rotational frequency corresponding to the rotation of the electric motor 3 (Step S6). Specifically, the mode switching module 22 determines whether or not a difference between a transmission shaft conversion value of the engine rotational frequency and a transmission shaft conversion value of the motor rotational frequency is a predetermined synchronization reference value or less.

In the present embodiment, a case where the rotational frequency synchronization control and the clutch control simultaneously proceed, and the clutch pressure has been maximized by the clutch control denotes that the transmission shaft rotational frequency corresponding to the rotation of the engine 2 has synchronized with the transmission shaft rotational frequency corresponding to the rotation of the electric motor 3. Therefore, the mode switching module 22 may determine whether or not the clutch pressure has been maximized, to determine whether or not the transmission shaft rotational frequency corresponding to the rotation of the engine 2 has synchronized with the transmission shaft rotational frequency corresponding to the rotation of the electric motor 3.

When it is not determined that the transmission shaft rotational frequency corresponding to the rotation of the engine 2 has synchronized with the transmission shaft rotational frequency corresponding to the rotation of the electric motor 3 (No in Step S6), the rotational frequency synchronization control and the clutch control continue. When it is determined that the transmission shaft rotational frequency corresponding to the rotation of the engine 2 has synchronized with the transmission shaft rotational frequency corresponding to the rotation of the electric motor 3 (Yes in Step S6), the mode switching module 22 changes the current control state from the rotational frequency synchronization control state to the torque change control state (Step S7).

### Torque Change Control

The torque change control is control in which the target torque of the engine 2 and the target torque of the electric motor 3 are gradually changed from those in the torque distribution state in the EV mode to those in the torque distribution state in the HEV mode.

In the present embodiment, since the clutch 5 is in the disengaged state in the EV mode, the electric motor 3 generates 100% of the total required torque. On the other hand, in the HEV mode, the engine 2 generates 100% of the total required torque in a steady state. When the torque generated by the engine 2 is inadequate as the total required torque, the electric motor 3 generates torque so as to compensate for the inadequate torque. To be specific, in the torque change control of the present embodiment, when switching the EV mode to the HEV mode, the motor target torque is changed from 100% of the total required torque to substantially 0%, and the engine target torque is changed from 0% of the total required torque to substantially 100%.

The example in FIG. 4 shows that each target torque linearly changes in the torque change control. However, the target torque may non-linearly change as long as the target torque gradually changes.

As described above, according to the control device 20 of the present embodiment, during the execution of the rotational frequency synchronization control, the degree of engagement of the clutch 5 is increased, and the clutch 5 becomes the half-engaged state. Therefore, the rotation of the transmission shaft is transmitted to the engine 2 so as to increase the rotational frequency of the engine 2. Thus, a time required for the rotational frequency synchronization control can be made shorter than that when the rotational frequency of the engine 2 is increased by controlling only the engine 2, for example, by controlling the throttle opening degree. As a result, a time required to change the traveling mode from the first traveling mode to the second traveling mode can be reduced.

Moreover, according to the present embodiment, the clutch control is executed during the execution of the rotational frequency synchronization control. To be specific, while the engine rotational frequency is increasing so as to approach the motor rotational frequency, the engagement of the clutch 5 is also performed. Therefore, the shock generated by the engagement of the clutch 5 can be made smaller than when performing the engagement of the clutch 5 with the engine 2 in the stop state (for example, when performing push starting).

Moreover, according to the present embodiment, as the shock tolerance increases, the half-engaged time that is a time from when the clutch is set to the half-engaged state until when the clutch 5 is set to the engaged state is reduced. Therefore, since the half-engaged time is reduced as the shock tolerance increases, the half-engaged time can be appropriately changed in accordance with whether or not the occupant can accept the shock.

Moreover, the shock tolerance may increase as the accelerator opening degree increases. When the occupant operates to increase the accelerator, the occupant supposes the generation of the shock by the operation of the clutch and therefore may be able to accept the shock. According to the present embodiment, the shock tolerance is set as a value that increases as the accelerator opening degree increases. Thus, the half-engaged time can be appropriately changed.

According to the present embodiment, as the shock tolerance increases, the throttle opening degree of the engine 2 is increased. Thus, the time required for the rotational frequency synchronization control can be reduced, and as a result, the clutch 5 can be more quickly set to the engaged state.

During the execution of the rotational frequency synchronization control, the processing circuitry controls the clutch such that the degree of engagement of the clutch 5 increases with time. Therefore, the shock generated at the vehicle body when the state of the clutch 5 is changed is made smaller than that when the state of the clutch 5 is suddenly changed.

### Other Embodiments

The present disclosure is not limited to the above embodiment. Modifications, additions, and eliminations may be made with respect to the configuration of the embodiment.

For example, in the above embodiment, each of the first shock tolerance and the second shock tolerance is described as a parameter that increases as the accelerator opening degree increases and that increases as the accelerator opening degree differential value increases. However, each of the first shock tolerance and the second shock tolerance is not limited to this. Hereinafter, the first shock tolerance and the second shock tolerance are collectively called a shock tolerance.

The shock tolerance may be a parameter that increases as at least one of the accelerator opening degree or the accelerator opening degree differential value increases. In addition to or instead of that the shock tolerance increases as at least one of the accelerator opening degree or the accelerator opening degree differential value increases, the shock tolerance may be associated with another parameter. The shock tolerance may be a value that is variably set based on the traveling state other than the accelerating state or based on the driving operation state. To be specific, the shock tolerance may be a value that is associated with a parameter indicating the traveling state or the driving operation state other than the accelerator opening degree and the accelerator opening degree differential value. Examples of the parameter indicating the traveling state or the driving operation state may include the accelerator opening degree, the bank angle, the vehicle speed, the gear stage, and the traveling position of the vehicle.

For example, that the hybrid vehicle is in the accelerating operation state may be detected by a parameter other than the accelerator opening degree, for example, by a change in the vehicle speed, and the shock tolerance may be a value that increases as the change in the vehicle speed increases.

For example, it is desirable to reduce the shock generated at the vehicle body when the hybrid vehicle is traveling while inclining the vehicle body (for example, when the hybrid vehicle is traveling on a curved road). Therefore, the shock tolerance may be a value that decreases as the bank angle increases.

For example, it is desirable that the shock generated at the vehicle body decrease as the vehicle speed of the hybrid vehicle increases. Therefore, the shock tolerance may be a value that decreases as the vehicle speed increases.

For example, the shock tolerance may be a value that is associated with the gear stage. For example, the shock generated when the gear stage of the hybrid vehicle is a low-speed stage (for example, first to fourth gear stages) is larger than the shock generated when the gear stage of the hybrid vehicle is a high-speed stage (for example, fifth and sixth gear stages). Therefore, it is desirable to suppress the shock at the low-speed stage. Thus, the shock tolerance at the low-speed stage may be a value smaller than the shock tolerance at the high-speed stage. Moreover, the shock tolerance during continuous shift-up or continuous shift-down may be a value larger than the shock tolerance not during continuous shift-up or continuous shift-down.

The shock tolerance may be a value that changes in accordance with the traveling position of the hybrid vehicle or the state of the traveling road surface. For example, while the hybrid vehicle is traveling on an expressway, it is desirable to suppress the shock generated at the vehicle body of the hybrid vehicle. Therefore, the shock tolerance while the hybrid vehicle is traveling on the expressway may be smaller than that while the hybrid vehicle is traveling on a normal road. Moreover, for example, while the hybrid vehicle is traveling on a gravel road, the vehicle body of the hybrid vehicle is vibrating due to the influence of gravel. Therefore, even when the shock is generated at the vehicle body by the increase in the throttle opening degree or the engagement of the clutch, the occupant may be able to accept such shock. Thus, the shock tolerance while the hybrid vehicle is traveling on the gravel road may be larger than the shock tolerance while the hybrid vehicle is traveling on the normal road. The traveling position of the hybrid vehicle can be detected by, for example, a GPS device mounted on the vehicle body.

For example, the degree of vibration of the vehicle body during traveling may be detected by a vibration sensor mounted on the vehicle body, and the shock tolerance may be a value that increases as the degree of vibration detected increases. For example, the degree of vibration may be calculated from the degree of acceleration of the vehicle body in an upper-lower direction or a left-right direction or may be calculated from the stroke amounts of the front and rear suspensions. To be specific, the vibration sensor may be an acceleration sensor or a stroke sensor.

In the above embodiment, the clutch control is started simultaneously with the start of the rotational frequency synchronization control. However, a start timing of the rotational frequency synchronization control and a start timing of the clutch control may be different from each other. For example, after the start of the engine is completed, in other words, after the engine has become the self-rotating state, the rotational frequency synchronization control may be started first, and the clutch control may be started in the middle of the execution of the rotational frequency synchronization control.

The processing of the switching control from the EV mode to the HEV mode in FIG. 3 is described as the processing of the switching control from the EV mode to the HEV mode when the engine 2 is in the stop state. However, the switching from the EV mode to the HEV mode may be started in a state where the engine is driving at low load for warming-up. In this case, Steps S2 and S3 in FIG. 3 may be omitted.

The functionality of the elements disclosed herein may be implemented using circuitry or processing circuitry which includes general purpose processors, special purpose processors, integrated circuits, ASICs ("Application Specific Integrated Circuits"), conventional circuitry or any combinations thereof which are configured or programmed to perform the disclosed functionality. Processors are considered processing circuitry or circuitry as they include transistors and other circuitry therein. In the disclosure, the circuitry, units, or means are hardware that carry out or are programmed to perform the recited functionality. The hardware may be any hardware disclosed herein or otherwise known which is programmed or configured to carry out the recited functionality. When the hardware is a processor which may be considered a type of circuitry, the circuitry, means, or units are a combination of hardware and software, the software being used to configure the hardware or processor.

A control device of a hybrid vehicle according to one aspect of the present disclosure is a control device of a hybrid vehicle, the hybrid vehicle including: an electric motor and an engine as traveling driving sources; a transmission shaft that transmits driving power of the electric motor to a driving wheel; and a clutch that switches whether to transmit driving power of the engine to the transmission shaft, the control device including processing circuitry. When a first traveling mode in which the driving wheel is driven by the power generated by the electric motor is changed to a second traveling mode in which the driving wheel is driven by at least the power generated by the engine, the processing circuitry executes rotational frequency synchronization control of controlling the engine such that a rotational frequency of the transmission shaft which corresponds to rotation of the engine synchronizes with a rotational frequency of the transmission shaft which corresponds to rotation of the electric motor. During execution of the rotational frequency synchronization control, the processing circuitry controls the clutch such that a degree of engagement of the clutch which corresponds to a degree of power transmission between the engine and the transmission shaft increases.

According to the above configuration, since the degree of engagement of the clutch increases during the execution of the rotational frequency synchronization control, the rotation of the transmission shaft is transmitted to the engine so as to increase the rotational frequency of the engine. Thus, the time required for the rotational frequency synchronization control can be made shorter than that when the rotational frequency of the engine is increased by controlling only the engine, for example, by controlling the throttle opening degree. As a result, a time required to change the traveling mode from the first traveling mode to the second traveling mode can be reduced.

The first traveling mode may be a traveling mode in which the engine is in a stop state, and the driving wheel is driven by the power generated by the electric motor. When the first traveling mode is changed to the second traveling mode, the processing circuitry may start the engine such that the engine changes from the stop state to a self-rotating state in which the engine rotates by itself, determine whether or not the engine has become the self-rotating state, and execute the rotational frequency synchronization control after it is determined that the engine has become the self-rotating state.

The processing circuitry may acquire a shock tolerance indicating a tolerance with respect to shock generated at a vehicle body of the hybrid vehicle, and as the acquired shock tolerance increases, the processing circuitry may reduce a half-engaged time that is a time from when an increase in the degree of engagement of the clutch is started until when the clutch is set to an engaged state.

A time required to switch from the first traveling mode to the second traveling mode decreases as the half-engaged time from when the clutch is set to the half-engaged state until when the clutch is set to the engaged state decreases. However, shock may be generated at the vehicle body of the hybrid vehicle when the state of the clutch is changed. This shock may lead to the uncomfortable feeling of the occupant of the hybrid vehicle. According to the above configuration, the half-engaged time decreases as the acquired shock tolerance increases. Therefore, the half-engaged time can be appropriately changed in accordance with whether or not the occupant can accept the shock.

The shock tolerance may be variably set based on a traveling state or a driving operation state.

The shock tolerance may increase as an accelerator opening degree increases. When the occupant operates to increase the accelerator, the occupant supposes the generation of the shock by the operation of the clutch and therefore may be able to accept the shock. Therefore, the shock tolerance is set as a value that increases as the accelerator opening degree increases. Thus, the half-engaged time can be appropriately changed.

The hybrid vehicle may be a vehicle that turns while banking the vehicle body toward one side in a vehicle width direction from an upright state. The shock tolerance may decrease as a bank angle increases.

It is desirable that the shock be small when the vehicle body is in a bank state. As described above, since the shock tolerance is set to a value that decreases as the bank angle increases, the half-engaged time can be appropriately changed.

The processing circuitry may increase a throttle opening degree of the engine as the shock tolerance increases.

As described above, since the throttle opening degree increases as the shock tolerance increases, the time required for the rotational frequency synchronization control can be reduced, and as a result, the clutch can be more quickly set to the engaged state.

During the execution of the rotational frequency synchronization control, the processing circuitry may control the clutch such that the degree of engagement of the clutch which corresponds to the degree of power transmission between the engine and the transmission shaft increases with time.

As described above, since the degree of engagement of the clutch increases with time during the execution of the rotational frequency synchronization control, the shock generated at the vehicle body when the state of the clutch is changed is reduced.

A control device of a hybrid vehicle according to another aspect of the present disclosure may be a control device of a hybrid vehicle, the hybrid vehicle including: an electric motor and an engine as traveling driving sources; a transmission shaft that transmits driving power of the electric motor to a driving wheel; and a clutch that switches whether to transmit driving power of the engine to the transmission shaft, the control device including processing circuitry. When a first traveling mode in which the driving wheel is driven by the power generated by the electric motor is changed to a second traveling mode in which the driving wheel is driven by at least the power generated by the engine, the processing circuitry may execute rotational frequency synchronization control of controlling the engine such that a rotational frequency of the transmission shaft which corresponds to rotation of the engine synchronizes with a rotational frequency of the transmission shaft which corresponds to rotation of the electric motor. During execution of the rotational frequency synchronization control, the processing circuitry may control the clutch such that a power transmission state between the engine and the transmission shaft increases with time. Based on a traveling state or a driving operation state, the processing circuitry may change a time required to change the clutch from a disengaged state to an engaged state or change an initial target value of an output of the engine in the rotation synchronization control.

## Claims

1. A control device of a hybrid vehicle,
the hybrid vehicle including:
an electric motor and an engine as traveling driving sources;
a transmission shaft that transmits driving power of the electric motor to a driving wheel; and
a clutch that switches whether to transmit driving power of the engine to the transmission shaft,
the control device comprising processing circuitry, wherein:
when a first traveling mode in which the driving wheel is driven by the power generated by the electric motor is changed to a second traveling mode in which the driving wheel is driven by at least the power generated by the engine, the processing circuitry executes rotational frequency synchronization control of controlling the engine such that a rotational frequency of the transmission shaft which corresponds to rotation of the engine synchronizes with a rotational frequency of the transmission shaft which corresponds to rotation of the electric motor; and
during execution of the rotational frequency synchronization control, the processing circuitry controls the clutch such that a degree of engagement of the clutch which corresponds to a degree of power transmission between the engine and the transmission shaft increases.

2. The control device according to claim 1, wherein:
the first traveling mode is a traveling mode in which the engine is in a stop state, and the driving wheel is driven by the power generated by the electric motor; and
when the first traveling mode is changed to the second traveling mode, the processing circuitry
starts the engine such that the engine changes from the stop state to a self-rotating state in which the engine rotates by itself,
determines whether or not the engine has become the self-rotating state, and
executes the rotational frequency synchronization control after it is determined that the engine has become the self-rotating state.

3. The control device according to claim 1, wherein:
the processing circuitry acquires a shock tolerance indicating a tolerance with respect to shock generated at a vehicle body of the hybrid vehicle and
as the acquired shock tolerance increases, the processing circuitry reduces a half-engaged time that is a time from when an increase in the degree of engagement of the clutch is started until when the clutch is set to an engaged state.

4. The control device according to claim 3, wherein the shock tolerance is variably set based on a traveling state or a driving operation state.

5. The control device according to claim 3, wherein the shock tolerance increases as an accelerator opening degree increases.

6. The control device according to claim 3, wherein:
the hybrid vehicle is a vehicle that turns while banking the vehicle body toward one side in a vehicle width direction from an upright state; and
the shock tolerance decreases as a bank angle increases.

7. The control device according to claim 3, wherein the processing circuitry increases a throttle opening degree of the engine as the shock tolerance increases.

8. A control device of a hybrid vehicle,
the hybrid vehicle including:
an electric motor and an engine as traveling driving sources;
a transmission shaft that transmits driving power of the electric motor to a driving wheel; and
a clutch that switches whether to transmit driving power of the engine to the transmission shaft,
the control device comprising processing circuitry, wherein:
when a first traveling mode in which the driving wheel is driven by the power generated by the electric motor is changed to a second traveling mode in which the driving wheel is driven by at least the power generated by the engine, the processing circuitry executes rotational frequency synchronization control of controlling the engine such that a rotational frequency of the transmission shaft which corresponds to rotation of the engine synchronizes with a rotational frequency of the transmission shaft which corresponds to rotation of the electric motor;
during execution of the rotational frequency synchronization control, the processing circuitry controls the clutch such that a degree of engagement of the clutch which is a degree of power transmission between the engine and the transmission shaft increases with time; and
based on a traveling state or a driving operation state, the processing circuitry changes a time required to change the clutch from a disengaged state to an engaged state or changes an initial target value of an output of the engine in the rotation synchronization control.
